# EUROPEAN PATENT SPECIFICATION

(11) **EP 1 934 651 B1**
(45) Date of publication and mention of the grant of the patent: **17.06.2015**
(21) Application number: 06821154.9
(22) Date of filing: 27.09.2006
(51) Int. Cl.: F21K 99/00, G03B 21/20, F21S 8/10, F21Y 101/02, F21Y 105/00

(54) **LIGHT SOURCE WITH LIGHT EMITTING ARRAY AND COLLECTION OPTIC**
LICHTQUELLE MIT LEUCHTANORDNUNG UND SAMMLEROPTIK
SOURCE LUMINEUSE COMPORTANT UN RESEAU D'ELEMENTS ELECTROLUMINESCENTS ET UN SYSTEME OPTIQUE DE COLLECTE

(30) Priority: 30.09.2005 US 242300
(43) Date of publication of application: 25.06.2008
(73) Proprietor: Koninklijke Philips N.V., 5656 AE Eindhoven (NL); Philips Lumileds Lighting Company, LLC., San Jose, CA 95131 (US)
(72) Inventor: HARBERS, Gerard, California 95131 (US); BIERHUIZEN, Serge, J., A., California 95131 (US)
(74) Representative: Bekkers, Joost J.J.
(86) International application number: PCT/IB2006/053513
(87) International publication number: WO 2007/036883

(56) References cited:
- EP-A1- 1 439 412
- JP-A- 6 349 306
- US-A1- 2004 105 091

## Description

### FIELD OF THE INVENTION

The present invention relates generally to light sources and more particularly to light sources that include light emitting elements arranged in an array and that use a collection optic.

### BACKGROUND

Light emitting diode (LED) devices have ever increasing applications. For example, optical systems that may use LEDs include projection systems (such as LCD and DLP projectors), theater lighting fixtures (such as gobos), fiber optic illuminators, or car head light fixtures. Such optical systems typically include a collection system that collimates the light to be efficiently transferred to a target. It is desirable, however, to continually improve the efficiency of optical systems that include LEDs, and light emitting elements in general.

### SUMMARY

A light system, in accordance with an embodiment of the present invention includes a light system as defined by claim 1 and a method as defined by claim 18. A collection optic having an optical axis is optically coupled to the array such that the optical axis is located at approximately the center of the array. The collection optic may be, e.g., a compound parabolic concentrator, a condenser lens, a rectangular angle transformer, a Fresnel lens, a lens using sections of total internal reflection surfaces, and any other appropriate device, and generally, has a higher transmission efficiency for rays emitted parallel to the optical axis than for rays emitted non-parallel to the optical axis.

### BRIEF DESCRIPTION OF THE DRAWINGS

Fig 1 illustrates a light source that may be used with the present invention.
Fig. 2 illustrates a light source, such as that shown in Fig. 1, with an additional optical system between the collection optic and the target.
Fig 3 is a graph illustrating the throughput efficiency of an optical system as a function of the angle θ between the ray and the optical axis.
Figs. 4A and 4B illustrate a cross-sectional view and a top view, respectively, of an array of light emitting elements, which consisting of nine LED dice in a 3x3 arrangement.
Fig. 5 illustrates a top view of an array consisting of sixteen LED dice in a 4x4 arrangement.
Fig. 6 illustrates a top view of an array consisting of twenty-five LED dice in a 5x5 arrangement.

### DETAILED DESCRIPTION

In accordance with an embodiment of the present invention, a light system that includes an array of light emitting elements positions the best performing light emitting elements on or near the center of the array, which is aligned with the optical axis of the collection optic.

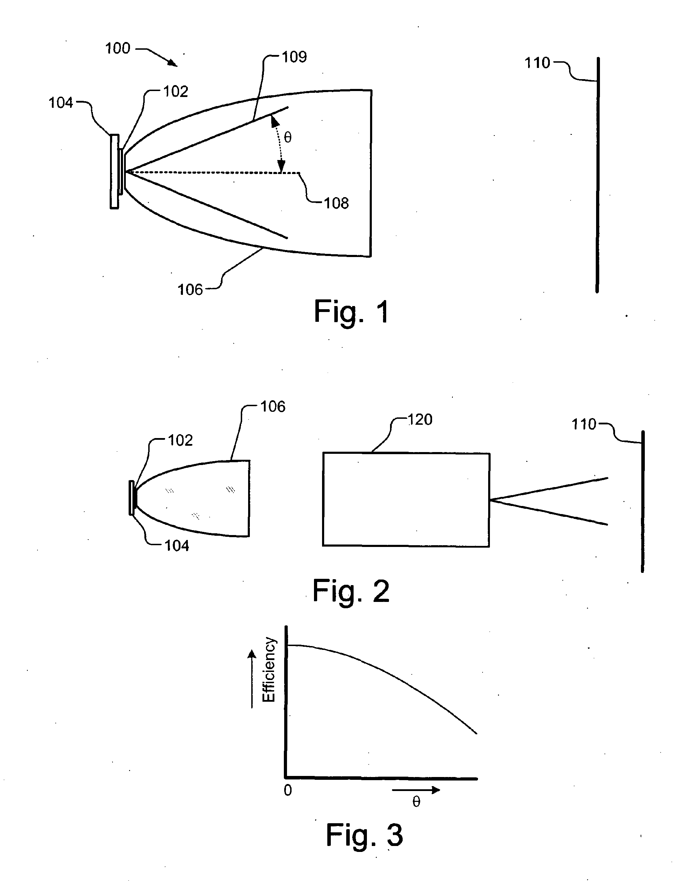

Fig 1 illustrates a light source 100 that may be used with the present invention. Light source 100 includes an array 102 of light emitting elements, such as light emitting diodes (LEDs), mounted on, e.g., a submount 104. Light source 100 includes a collection optic 106, illustrated as a compound parabolic concentrator. Other or additional collection optics, however, may be used with the present invention if desired, such as a condenser lens, a rectangular angle transformer, a Fresnel lens, a lens using sections of total internal reflection surfaces (TIR), and any other appropriate device. In general, the compound parabolic concentrator is, e.g., a reflector with reflective walls that are at an angle with respect to the array to generally collimate the light emitted by the array 102 of light emitting elements. Alternatively, a straight wall tunnel might be used, at least for the first section, to achieve a better spatial distribution of light. The collimated light is used to illuminate target 110, which may be any object to be illuminated or highlighted. Light source 100 shown in Fig. 1 may be the complete light source system. Alternatively, as illustrated in Fig. 2, light source 100 may include one or more additional optical system 120 between the collection optic 106 and the target 110.

As illustrated in Fig. 1, the collection optic 106 includes an optical axis 108, which is aligned approximately at the center of the array 102. Also shown in Fig. 1 are illustrative rays 109 that enter the collection optic 106 from the array 102. The rays 109 are illustrated as having an angle θ with respect to the optical axis 108. Fig 3 is a graph illustrating the throughput efficiency of an optical system as a function of the angle θ between the ray and the optical axis when the ray enters the system. The graph in Fig. 3 shows that as the angle θ increases, the efficiency of the optical system decreases. The maximum efficiency is found when the angle θ is zero, and is, thus, when the rays 109 travel close to or parallel with the optical axis 108.

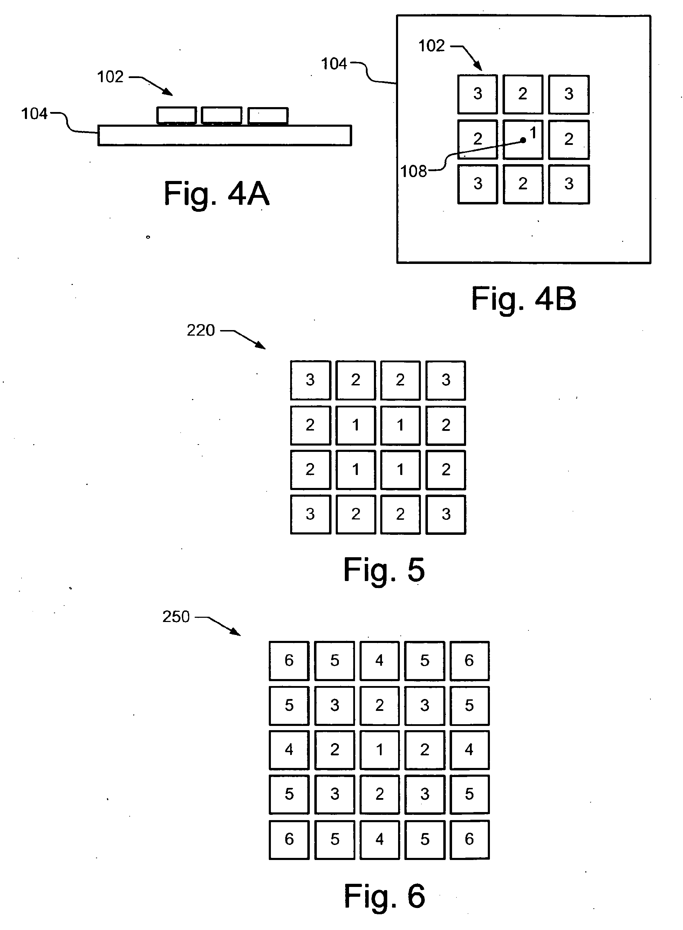

Figs. 4A and 4B illustrate a top view and a cross-sectional view, respectively, of the array 102 of light emitting elements, which consists, e.g., of nine LED dice in a 3x3arrangement. The LED dice are placed on a common submount 104, which has electrical connections for the LEDs. The light emitting elements may be any type of LED or other appropriate light element. For example, the LEDs shown in Figs. 4A and 4B may be flip-chips, which have the n and p contacts formed on one side of the dies so that wire connectors are not needed. The submount 104 has corresponding contact pads that may be soldered to the dice contact pads. The submount 104 may be connected to a circuit board, a lead frame or other support assembly, and further connected to a heat sink if desired. The LEDs may be phosphor converted to produce, e.g., white light. Examples of forming LEDs, as well as different color phosphors, are described in U.S. Patent Nos. 6,133,589; 6,274,399; 6,274,924; 6,291,839; 6,525,335; 6,576,488; 6,649,440; and 6,885,035, all of which are incorporated herein by reference. It should be understood, however, that any suitable LED, or other light-emitting element, may be used with the present invention.

In practice, light emitting elements, such as LEDs, vary in performance, such as luminance and/or efficiency or any other parameter that is the key performance criterion for the system. By way of example, other parameters that may be a performance criterion include desired angular emission, color, polarization, or temperature dependence. As illustrated in the graph in Fig. 3, however, the efficiency of an optical system increases as the angle θ between the rays of emitted light and the optical axis decreases. Thus, the optical system has a higher transmission efficiency for rays emitted parallel to the optical axis than for rays emitted nonparallel to the optical axis. With the optical axis 108 of the collection optic 106 aligned with the center of the array 102, the light rays that travel close to or parallel with the optical axis 108 are generally produced at the central region of the array.

Accordingly, to increase efficiency of the light source 100, the superior performing light emitting elements are positioned in the center of the array 102 so that it is the superior performing light emitting elements that produce rays close to or parallel with the optical axis 108.

For illustrative purposes, three separate LED positions in the array 102 are labeled in Fig. 4B. As illustrated in Fig. 4B, a center region of array 102 is labeled as position 1, a second region of array 102 is labeled as position 2, and a third region of array 102 is labeled as position 3. The center region 1 in array 102 is located at the center of the array, which is aligned with the optical axis 108. The second region 2 is orthogonally located relative to the center region 1 and is farther away from the center of the array 102 and the optical axis 108 than the center region 1. The third region 3 is located along the diagonal and is therefore farther away from the center of the array 102 than both the center region 1 and the second region 2.

In accordance with the present invention, the light-emitting element with superior performance relative to the remainder of the light emitting elements in the array 102 is mounted at the center region 1 of the array 102. The four next best performing light emitting elements are mounted at the second region 2 of the array 102. Finally, the four light emitting elements with the worst performance are located at the position farthest from center, i.e., the third region 3 in array 102. Thus, the light emitting elements with the best performance are positioned on or near to the optical axis 108, while inferior performing light emitting elements are positioned farther away from the optical axis 108. In such a configuration, the light emitted approximately parallel to the optical axis from the best performing light emitting element, e.g., at the center region 1, is not reflected by the reflective walls of the collection optic 106.

Because the performance of each light-emitting element must be known prior to mounting, the performance of each light-emitting element is tested before the light-emitting element is mounted to the submount 104. By way of example, the LED dice may be tested while in wafer form. Alternatively, the LED chips may be first mounted on an array of connected submounts, which are easily tested later singulated and mounted on the final submount 104. In one embodiment, a large batch of light emitting elements may be tested and organized based on performance into three groups; the best performers, the second best performers and the third best performers. The light emitting elements from the best performer group are mounted in the center regions 1 of different arrays, while light emitting elements from the second best performer group are mounted in second regions 2 and light emitting elements from the third best performer group are mounted in the third region 3.

It should be understood that the number of regions in the array 102 is illustrative. For example, the array 102 may be divided into a center region 1 and a secondary region that includes both positions 2 and 3. In this embodiment, the light-emitting element with the best performance is mounted in the center region 1 and the remainder of light emitting elements is mounted outside the center region 1, i.e., in the secondary region 2, 3.

Moreover, the array used in the present invention may be larger than 3x2. For example, Fig. 5 illustrates an array 220 consisting of sixteen LED dice in a 4x4 arrangement. Fig. 5 includes labels for the locations of LEDs based on performance, similar to that shown in Fig. 4B. The four best performing LEDs are mounted in the center region indicated generally with the numeral 1, while the eight LEDs with second best performance are mounted in a second region indicated generally with the numeral 2. The four LEDs with inferior performance are mounted in the third region indicated generally with the numeral 3.

Fig. 6 illustrates another LED array 250 consisting of twenty-five LED dice in a 5x5 arrangement. The preference of LED placement is indicated by the numbers. In array 250 there are six unique positions. As discussed above, the LEDs are mounted in the array 250 with the best performing LEDs at the positions with the highest rank, i.e., closest to center, and the worst performing LEDs at the positions with the lowest rank, i.e., farthest from center.

Although the present invention is illustrated in connection with specific embodiments for instructional purposes, the present invention is not limited thereto. Various adaptations and modifications may be made without departing from the scope of the invention. It should be understood that the present invention may be used with larger LED arrays or with other array configurations, such as non-square arrangements, e.g., 2x3, or linear arrangements, e.g., 1x3. Therefore, the scope of the appended claims should not be limited to the foregoing description.

## Claims

1. A light system comprising:
a plurality of light emitting elements arranged in an array (102), the array comprising:
a center region (1) in which is positioned a first light emitting element, the first light emitting element having superior performance relative to the light emitting elements arranged outside the center region;
a second region (2) that is outside the center region, the second region containing a second group of light emitting elements having lower performance relative to the first light emitting element; **CHARACTERIZED IN THAT**
the array comprises a third region (3) that is outside the second region, the third region being more distant from the center region than the second region, the third region containing a third group of light emitting elements having lower performance relative to the first light emitting element and the second group of light emitting elements.

2. The light system of Claim 1, wherein performance includes at least one of luminance, efficiency, angular emission, color, polarization, and temperature dependence.

3. The light system of Claim 1, further comprising a collection optic (106) having an optical axis (108), the collection optic being optically coupled to the array (102) with the optical axis located at approximately the center of the center region of the array.

4. The light system of Claim 3, wherein the collection optic (106) has a higher efficiency for rays emitted parallel to the optical axis (108) than for rays emitted non-parallel to the optical axis.

5. The light system of Claim 3, wherein the collection optic (106) is one or more of a condenser lens, a compound parabolic concentrator, a rectangular angle transformer, a Fresnel lens, and a lens using sections of total internal reflection surfaces.

6. The light system of Claim 1, wherein the center region (1) contains a single light-emitting element.

7. The light system of Claim 1, wherein the center region (1) contains a plurality of light emitting elements, each of which having superior performance relative to the light emitting elements arranged outside the center region.

8. The light system of Claim 1, the array (102) being a square array, the second region (2) being orthogonally located relative to the center region, and the third region (3) being diagonally located relative to the center region.

9. The light system of Claim 8, wherein the array (102, 220) is one of a 3x3 and a 4x4 array.

10. The light system of Claim 1, the array (102) further comprising:
a fourth region (4) that is more distant from the center region (1) than the third region (3), the fourth region containing a fourth group of light emitting elements having lower performance relative to the first light emitting element, the second group of light emitting elements, and the third group of light emitting elements;
a fifth region (5) that is more distant from the center region than the fourth region, the fifth region containing a fifth group of light emitting elements having lower performance relative to the first light emitting element, the second group of light emitting elements, the third group of light emitting elements, and the fourth group of light emitting elements; and
a sixth region (6) that is more distant from the center region than the fifth region, the sixth region containing a sixth group of light emitting elements having lower performance relative to the first light emitting element, the second group of light emitting elements, the third group of light emitting elements, the fourth group of light emitting elements and the fifth group of light emitting elements.

11. The light system of Claim 10, wherein the array (250) is a 5x5 array.

12. The light system of Claim 1, wherein the array is a non-square array.

13. A light source (100) comprising:
a collection optic (106) having an optical axis (108); and
a light system according to claim 1 optically coupled to the collection optic, the array having its center region (1) aligned with the optical axis.

14. The light source of Claim 13, wherein performance includes at least one of luminance, efficiency, angular emission, color, polarization, and temperature dependence.

15. The light source of Claim 13, wherein the collection optic (106) has a higher efficiency for rays emitted parallel to the optical axis than for rays emitted non-parallel to the optical axis.

16. The light source of Claim 13, wherein the collection optic (106) is one or more of a condenser lens, a compound parabolic concentrator, a rectangular angle transformer, a Fresnel lens, and a lens using sections of total internal reflection surfaces.

17. The light source of Claim 13, the center region (1) comprising a plurality of light emitting elements each of which is has superior performance relative to light emitting elements mounted outside the center region of the array (102).

18. A method for arranging a light source (100), the method comprising:
determining the performance of a plurality of light emitting elements; and producing an array (102) of light emitting element by mounting a first light emitting element at or near a center of the array, mounting a second group of light emitting elements having lower performance relative to the first light emitting element farther from the center of the array than the first light emitting element, and mounting a third group of light emitting elements having a lower performance relative to the second group of light emitting elements farther from the center of the array than the second group.

19. The method of Claim 18, further comprising optically coupling a collection optic (106) having an optical axis (108) to the array (102) of light emitting elements, the optical axis being aligned approximately with the center of the array.

20. The method of Claim 18, wherein performance includes at least one of luminance, efficiency, angular emission, color, polarization, and temperature dependence of the light emitting elements.

21. The method of Claim 18, further comprising mounting a plurality of first light emitting elements near the center of the array (102), each of first light emitting elements having superior performance relative to the light emitting elements in the array other than said first light emitting elements.

22. The method of Claim 18, wherein the first light-emitting element is mounted at the center of the array (102).

## Patentansprüche

1. Lichtsystem, umfassend:
mehrere in einem Array (102) angeordnete Licht emittierende Elemente, wobei das Array umfasst:
einen Zentrumsbereich (1), in dem ein erstes Licht emittierendes Element positioniert ist, wobei das erste Licht emittierende Element eine überragende Leistung gegenüber den außerhalb des Zentrumsbereichs angeordneten Licht emittierenden Elementen aufweist;
einen zweiten Bereich (2), der außerhalb des Zentrumsbereichs liegt, wobei der zweite Bereich eine zweite Gruppe von Licht emittierenden Elementen enthält, die gegenüber dem ersten Licht emittierenden Element eine geringere Leistung aufweisen, **dadurch gekennzeichnet, dass**
das Array einen dritten Bereich (3) umfasst, der außerhalb des zweiten Bereichs liegt, wobei der dritte Bereich von dem Zentrumsbereich weiter als der zweite Bereich entfernt ist, wobei der dritte Bereich eine dritte Gruppe von Licht emittierenden Elementen enthält, die gegenüber dem ersten Licht emittierenden Element und der zweiten Gruppe von Licht emittierenden Elementen eine geringere Leistung aufweisen.

2. Lichtsystem nach Anspruch 1, wobei die Leistung mindestens eine der folgenden umfasst: Luminanz, Leistungsfähigkeit, Winkelemission, Farbe, Polarisation sowie Temperaturabhängigkeit.

3. Lichtsystem nach Anspruch 1, das weiterhin eine Sammeloptik (106) mit einer optischen Achse (108) umfasst, wobei die Sammeloptik mit dem Array (102) optisch gekoppelt ist, wobei die optische Achse an in etwa dem Mittelpunkt des Zentrumsbereichs des Arrays liegt.

4. Lichtsystem nach Anspruch 3, wobei die Sammeloptik (106) eine höhere Leistungsfähigkeit bei parallel zu der optischen Achse (108) emittierten Strahlen als bei nicht-parallel zu der optischen Achse emittierten Strahlen aufweist.

5. Lichtsystem nach Anspruch 3, wobei die Sammeloptik (106) eine oder mehrere der folgenden ist: eine Kondensorlinse, ein Compound-Parabolic-Concentrator, ein rechteckiger Winkeltransformator, eine Fresnel-Linse sowie eine Linse unter Verwendung von Teilen von Totalreflexionsflächen.

6. Lichtsystem nach Anspruch 1, wobei der Zentrumsbereich (1) ein einzelnes Licht emittierendes Element enthält.

7. Lichtsystem nach Anspruch 1, wobei der Zentrumsbereich (1) eine Mehrzahl von Licht emittierenden Elementen enthält, von denen jedes eine überragende Leistung gegenüber den außerhalb des Zentrumsbereichs angeordneten Licht emittierenden Elementen aufweist.

8. Lichtsystem nach Anspruch 1, wobei das Array (102) ein quadratisches Array ist, wobei der zweite Bereich (2) gegenüber dem Zentrumsbereich orthogonal angeordnet ist und der dritte Bereich (3) gegenüber dem Zentrumsbereich diagonal positioniert ist.

9. Lichtsystem nach Anspruch 8, wobei das Array (102, 220) ein 3x3 oder ein 4x4 Array ist.

10. Lichtsystem nach Anspruch 1, wobei das Array (102) weiterhin umfasst:
einen vierten Bereich (4), der von dem Zentrumsbereich (1) weiter als der dritte Bereich (3) entfernt ist, wobei der vierte Bereich eine vierte Gruppe von Licht emittierenden Elementen enthält, die gegenüber dem ersten Licht emittierenden Element, der zweiten Gruppe von Licht emittierenden Elementen und der dritten Gruppe von Licht emittierenden Elementen eine geringere Leistung aufweisen;
einen fünften Bereich (5), der von dem Zentrumsbereich weiter als der vierte Bereich entfernt ist, wobei der fünfte Bereich eine fünfte Gruppe von Licht emittierenden Elementen enthält, die gegenüber dem ersten Licht emittierenden Element, der zweiten Gruppe von Licht emittierenden Elementen, der dritten Gruppe von Licht emittierenden Elementen und der vierten Gruppe von Licht emittierenden Elementen eine geringere Leistung aufweisen;
einen sechsten Bereich (6), der von dem Zentrumsbereich weiter als der fünfte Bereich entfernt ist, wobei der sechste Bereich eine sechste Gruppe von Licht emittierenden Elementen enthält, die gegenüber dem ersten Licht emittierenden Element, der zweiten Gruppe von Licht emittierenden Elementen, der dritten Gruppe von Licht emittierenden Elementen, der vierten Gruppe von Licht emittierenden Elementen und der fünften Gruppe von Licht emittierenden Elementen eine geringere Leistung aufweisen.

11. Lichtsystem nach Anspruch 10, wobei das Array (250) ein 5x5 Array ist.

12. Lichtsystem nach Anspruch 1, wobei das Array ein nicht-quadratisches Array ist.

13. Lichtquelle (100), umfassend:
eine Sammeloptik (106) mit einer optischen Achse (108) sowie
ein Lichtsystem nach Anspruch 1, das mit der Sammeloptik optisch gekoppelt ist, wobei der Zentrumsbereich (1) des Arrays zu der optischen Achse ausgerichtet ist.

14. Lichtquelle nach Anspruch 13, wobei die Leistung mindestens eine der folgenden umfasst: Luminanz, Leistungsfähigkeit, Winkelemission, Farbe, Polarisation sowie Temperaturabhängigkeit.

15. Lichtquelle nach Anspruch 13, wobei die Sammeloptik (106) eine höhere Leistungsfähigkeit bei parallel zu der optischen Achse emittierten Strahlen als bei nicht-parallel zu der optischen Achse emittierten Strahlen aufweist.

16. Lichtquelle nach Anspruch 13, wobei die Sammeloptik (106) eine oder mehrere der folgenden ist: eine Kondensorlinse, ein Compound-Parabolic-Concentrator, ein rechteckiger Winkeltransformator, eine Fresnel-Linse sowie eine Linse unter Verwendung von Teilen von Totalreflexionsflächen.

17. Lichtquelle nach Anspruch 13, wobei der Zentrumsbereich (1) eine Mehrzahl von Licht emittierenden Elementen enthält, von denen jedes eine überragende Leistung gegenüber den außerhalb des Zentrumsbereichs des Arrays (102) angeordneten Licht emittierenden Elementen aufweist.

18. Verfahren zur Anordnung einer Lichtquelle (100), wobei das Verfahren die folgenden Schritte umfasst, wonach:
die Leistung einer Mehrzahl von Licht emittierenden Elementen ermittelt wird; und ein Array (102) von Licht emittierenden Elementen hergestellt wird, indem ein erstes Licht emittierendes Element an oder in der Nähe eines Mittelpunkts des Arrays angebracht wird, eine zweite Gruppe von Licht emittierenden Elementen mit einer geringeren Leistung gegenüber dem ersten Licht emittierenden Element weiter von dem Mittelpunkt des Arrays als das erste Licht emittierende Element angebracht wird und eine dritte Gruppe von Licht emittierenden Elementen mit einer geringeren Leistung gegenüber der zweiten Gruppe von Licht emittierenden Elementen weiter von dem Mittelpunkt des Arrays als die zweite Gruppe angebracht wird.

19. Verfahren nach Anspruch 18, wonach weiterhin eine Sammeloptik (106) mit einer optischen Achse (108) mit dem Array (102) von Licht emittierenden Elementen optisch gekoppelt wird, wobei die optische Achse ungefähr zu dem Mittelpunkt des Arrays ausgerichtet ist.

20. Verfahren nach Anspruch 18, wobei die Leistung mindestens eine der folgenden umfasst: Luminanz, Leistungsfähigkeit, Winkelemission, Farbe, Polarisation sowie Temperaturabhängigkeit.

21. Verfahren nach Anspruch 18, wonach weiterhin eine Mehrzahl von Licht emittierenden Elementen in der Nähe des Mittelpunkts des Arrays (102) angebracht wird, wobei jedes der ersten Licht emittierenden Elemente eine überragende Leistung gegenüber den Licht emittierenden Elementen in dem Array außer den ersten Licht emittierenden Elementen aufweist.

22. Verfahren nach Anspruch 18, wobei das erste Licht emittierende Element an dem Mittelpunkt des Arrays (102) angebracht wird.

## Revendications

1. Système d'éclairage comprenant :
une pluralité d'éléments d'émission lumineuse agencés dans un réseau (102), le réseau comprenant :
une région centrale (1) dans laquelle est positionné un premier élément d'émission lumineuse, le premier élément d'émission lumineuse ayant une performance supérieure à celle des éléments d'émission lumineuse agencés à l'extérieur de la région centrale ;
une deuxième région (2) qui est à l'extérieur de la région centrale, la deuxième région contenant un deuxième groupe d'éléments d'émission lumineuse ayant une performance inférieure à celle du premier élément d'émission lumineuse ;
**caractérisé en ce que**
le réseau comprend une troisième région (3) qui est à l'extérieur de la deuxième région, la troisième région étant plus distante de la région centrale que la deuxième région, la troisième région contenant un troisième groupe d'éléments d'émission lumineuse ayant une performance inférieure à celle du premier élément d'émission lumineuse et à celle du deuxième groupe d'éléments d'émission lumineuse.

2. Système d'éclairage selon la revendication 1, dans lequel une performance comprend au moins l'un d'une luminance, un rendement, une émission angulaire, une couleur, une polarisation et une dépendance de température.

3. Système d'éclairage selon la revendication 1, comprenant en outre un élément optique de collecte (106) ayant un axe optique (108), l'élément optique de collecte étant optiquement couplé au réseau (102) avec l'axe optique situé approximativement au centre de la région centrale du réseau.

4. Système d'éclairage selon la revendication 3, dans lequel l'élément optique de collecte (106) a un rendement pour des rayons émis parallèlement à l'axe optique (108) qui est supérieur à un rendement pour des rayons émis non parallèlement à l'axe optique.

5. Système d'éclairage selon la revendication 3, dans lequel l'élément optique de collecte (106) est un ou plusieurs d'une lentille de condenseur, un concentrateur parabolique composé, un transformateur d'angle rectangulaire, une lentille de Fresnel, et une lentille utilisant des sections de surfaces de réfléchissement interne total.

6. Système d'éclairage selon la revendication 1, dans lequel la région centrale (1) contient un élément d'émission lumineuse unique.

7. Système d'éclairage selon la revendication 1, dans lequel la région centrale (1) contient une pluralité d'éléments d'émission lumineuse, chacun d'eux ayant une performance supérieure à celle des éléments d'émission lumineuse agencés à l'extérieur de la région centrale.

8. Système d'éclairage selon la revendication 1, dans lequel le réseau (102) est un réseau carré, la deuxième région (2) est orthogonale à la région centrale, et la troisième région (3) est diagonale à la région centrale.

9. Système d'éclairage selon la revendication 8, dans lequel le réseau (102, 220) est l'un d'un réseau 3x3 et d'un réseau 4x4.

10. Système d'éclairage selon la revendication 1, dans lequel le réseau (102) comprend en outre :
une quatrième région (4) qui est plus distante de la région centrale (1) que la troisième région (3), la quatrième région contenant un quatrième groupe d'éléments d'émission lumineuse ayant une performance inférieure à celle du premier élément d'émission lumineuse, à celle du deuxième groupe d'éléments d'émission lumineuse et à celle du troisième groupe d'éléments d'émission lumineuse ;
une cinquième région (5) qui est plus distante de la région centrale que la quatrième région, la cinquième région contenant un cinquième groupe d'éléments d'émission lumineuse ayant une performance inférieure à celle du premier élément d'émission lumineuse, à celle du deuxième groupe d'éléments d'émission lumineuse, à celle du troisième groupe d'éléments d'émission lumineuse et à celle du quatrième groupe d'éléments d'émission lumineuse ; et
une sixième région (6) qui est plus distante de la région centrale que la cinquième région, la sixième région contenant un sixième groupe d'éléments d'émission lumineuse ayant une performance inférieure à celle du premier élément d'émission lumineuse, à celle du deuxième groupe d'éléments d'émission lumineuse, à celle du troisième groupe d'éléments d'émission lumineuse, à celle du quatrième groupe d'éléments d'émission lumineuse et à celle du cinquième groupe d'éléments d'émission lumineuse.

11. Système d'éclairage selon la revendication 10, dans lequel le réseau (250) est un réseau 5x5.

12. Système d'éclairage selon la revendication 1, dans lequel le réseau est un réseau non carré.

13. Source lumineuse (100) comprenant :
un élément optique de collecte (106) ayant un axe optique (108) ; et
un système d'éclairage selon la revendication 1 optiquement couplé à l'élément optique de collecte, la région centrale (1) du réseau étant alignée avec l'axe optique.

14. Source lumineuse selon la revendication 13, dans laquelle une performance comprend au moins l'un d'une luminance, un rendement, une émission angulaire, une couleur, une polarisation et une dépendance de température.

15. Source lumineuse selon la revendication 13, dans laquelle l'élément optique de collecte (106) a un rendement pour des rayons émis parallèlement à l'axe optique qui est supérieur à un rendement pour des rayons émis non parallèlement à l'axe optique.

16. Source lumineuse selon la revendication 13, dans laquelle l'élément optique de collecte (106) est un ou plusieurs d'une lentille de condenseur, un concentrateur parabolique composé, un transformateur d'angle rectangulaire, une lentille de Fresnel, et une lentille utilisant des sections de surfaces de réfléchissement interne total.

17. Source lumineuse selon la revendication 13, dans laquelle la région centrale (1) comprend une pluralité d'éléments d'émission lumineuse, chacun d'eux ayant une performance supérieure à celle des éléments d'émission lumineuse montés à l'extérieur de la région centrale du réseau (102).

18. Procédé pour agencer une source lumineuse (100), le procédé comprenant :
la détermination de la performance d'une pluralité d'éléments d'émission lumineuse ; et la production d'un réseau (102) d'éléments d'émission lumineuse en montant un premier élément d'émission lumineuse au centre du réseau ou à proximité de celui-ci, en montant un deuxième groupe d'éléments d'émission lumineuse ayant une performance inférieure à celle du premier élément d'émission lumineuse plus loin du centre du réseau que le premier élément d'émission lumineuse, et en montant un troisième groupe d'éléments d'émission lumineuse ayant une performance inférieure à celle du deuxième groupe d'éléments d'émission lumineuse plus loin du centre du réseau que le deuxième groupe.

19. Procédé selon la revendication 18, comprenant en outre le couplage optique d'un élément optique de collecte (106) ayant un axe optique (108) au réseau (102) d'éléments d'émission lumineuse, l'axe optique étant aligné approximativement avec le centre du réseau.

20. Procédé selon la revendication 18, dans lequel une performance comprend au moins l'un d'une luminance, un rendement, une émission angulaire, une couleur, une polarisation et une dépendance de température des éléments d'émission lumineuse.

21. Procédé selon la revendication 18, comprenant en outre le montage d'une pluralité de premiers éléments d'émission lumineuse près du centre du réseau (102), chacun des premiers éléments d'émission lumineuse ayant une performance supérieure à celle des éléments d'émission lumineuse dans le réseau autres que lesdits premiers éléments d'émission lumineuse.

22. Procédé selon la revendication 18, dans lequel le premier élément d'émission lumineuse est monté au centre du réseau (102).
